Europäisches Patentamt

European Patent Office

Office européen des brevets

(19)

(11) **EP 0 707 191 A2**

(12) **EUROPÄISCHE PATENTANMELDUNG**

(43) Veröffentlichungstag:
17.04.1996 Patentblatt 1996/16

(51) Int. Cl.⁶: **G01B 9/02**

(21) Anmeldenummer: 95114602.6

(22) Anmeldetag: 16.09.1995

(84) Benannte Vertragsstaaten:
**AT CH DE FR GB LI**

(30) Priorität: **15.10.1994 DE 4436922**

(71) Anmelder: **JENOPTIK Technologie GmbH**
**D-07745 Jena (DE)**

(72) Erfinder:
• **Rothhardt, Manfred**
**D-07743 Jena (DE)**
• **Seide, Wolfgang**
**D-07743 Jena (DE)**

(54) **Interferometeranordnung zur frequenz- und umweltunabhängigen Längenmessung**

(57) Die Erfindung betrifft eine Interferometeranordnung zur frequenz- und umweltunabhängigen Längenmessung, vorzugsweise bei hohen Anforderungen an die Reproduzierbarkeit des Meßortes.

Die Aufgabe, eine Möglichkeit zur Realisierung einer von Frequenzschwankungen der Laserlichtquelle und Umweltänderungen unabhängigen und reproduzierbaren Weglängenmessung zu finden, die eine räumliche Trennung von Streckennormal ($I_N$) und Meßort vermeidet, wird erfindungsgemäß gelöst, indem zwei Meßspiegel (41;42) auf dem Meßobjekt (5) angeordnet sind, die in Meßrichtung (52) einen Abstand in der Größe des erforderlichen Streckennormals ($I_N$) aufweisen, und ein Referenzspiegel (43) an der Meßsystembasis (6) angebracht ist, so daß die Phasendifferenzen ($P_1;P_2$) aus den zwei Meßarmen (31;32) gegenüber der vom Referenzspiegel vorgegebenen jeweiligen Nullage, dividiert durch die effektive Phasendifferenz ($P_2 - P_1$) des Streckennormals ($I_N$) und multipliziert mit dem Längenmaß des Streckennormals ($I_N$), den Meßwert ($I_x$) der gesuchten Weglängendifferenz ergeben.

Die Erfindung findet Anwendung in der interferometrischen Längenmeßtechnik, vorzugsweise bei der Positionierung von Tischsystemen für Prozesse in der Halbleiterindustrie.

Fig. 1

**Beschreibung**

Die Erfindung betrifft eine Interferometeranordnung zur frequenz- und umweltunabhängigen Längenmessung, vorzugsweise zur Messung von Weglängen und Weglängendifferenzen mit hohen Anforderungen an die Reproduzierbarkeit eines Meßortes.

In der interferometrischen Längenmeßtechnik hat die Abhängigkeit des Maßstabes (Lichtwellenlänge) von der Frequenz, vom Medium, in dem die Messung erfolgt, und von den im Medium herrschenden Bedingungen (Umweltbedingungen wie beispielsweise Druck, Temperatur, Feuchte) entscheidenden Einfluß auf die Meßgenauigkeit und die Reproduzierbarkeit eines Meßortes.

In der Vergangenheit sind bereits verschiedene Lösungen angegeben worden, die den Einfluß der Wellenlängenänderungen reduzieren oder kompensieren.

Messungen der Umweltbedingungen (Klimastation) können bei bekanntem Medium, wie Normalluft, und hinreichend genau bekannter und stabiler Frequenz der Laserlichtquelle zur Korrektur der aktuellen Wellenlänge dienen.

Brechzahlmessungen im Medium setzen gleichfalls die Kenntnis und zeitliche Konstanz der Frequenz voraus.

Messungen einer wohldefinierten, zeitlich invarianten Strecke mit einem zusätzlichen Interferometer (Korrekturstrecke, Wavelenght-Tracker) gestatten die direkte Ermittlung der Wellenlänge. Abgesehen vom technischen Aufwand besitzen sie den Nachteil, daR sie an eine konstruktive Form gebunden sind und damit zwischen dem eigentlichen Meßmedium und der Korrekturstrecke eine räumliche Trennung besteht.

Andere Lösungen mit Korrekturstrecke sehen eine Frequenzbeeinflussung derart vor, daß die Wellenlänge im Meßmedium konstant gehalten wird.

Eine einfache Korrekturlösung ist in DE 41 00 773 beschrieben, die unter Verwendung eines symmetrischen Doppelinterferometers und zweier Referenzspiegel, die in einem als Längennormal dienenden Abstand angeordnet sind, eine unmittelbare Bestimmung der aktuellen Wellenlänge im Meßmedium gestattet. Für einige Anwendungen erweist es sich jedoch als nachteilig, daß das Längennormal neben, über oder unter dem beweglichen Meßobjekt angeordnet werden muß, da die räumliche Trennung z.T. erheblich ist (z.B. Mehrkoordinatentische).

Der Erfindung liegt die Aufgabe zugrunde, eine Möglichkeit zur Realisierung einer von Frequenzschwankungen der Laserlichtquelle und Umweltänderungen unabhängigen, genauen und reproduzierbaren Weglängenmessung zu finden, die eine räumliche Trennung von Streckennormal und Meßort vermeidet.

Erfindungsgemäß wird die Aufgabe bei einer Interferometeranordnung zur frequenz- und umweltunabhängigen Längenmessung, die eine Laserlichtquelle, optische Mittel zur Strahlführung und symmetrischen Strahlteilung in mindestens drei Interferometerarme, wobei zwei parallele Interferometerarme ein Streckennormal in Form von innerhalb des Meßvolumens mit festem Abstand angeordneten Reflektoren aufweisen, ein wenigstens in Richtung des Streckennormals auf einer Meßsystembasis bewegliches Meßobjekt sowie Mittel zur Aufnahme und Auswertung von Interferenzsignalen enthält, dadurch gelöst, daß mindestens ein erster und ein zweiter Meßarm vorhanden sind, wobei für beide Meßarme jeweils ein Meßspiegel auf dem Meßobjekt angeordnet ist und die Meßspiegel in Meßrichtung den Abstand des Streckennormals aufweisen, daß wenigstens ein weiterer Interferometerarm als Referenzarm mit einem Referenzspiegel vorhanden ist, wobei der Referenzspiegel mit der Meßsystembasis starr verbunden und so angeordnet ist, daR das von den Meßspiegeln gebildete Streckennormal vollständig am Referenzspiegel vorbeibewegbar ist und daß die Mittel zur Aufnahme und Auswertung von Interferenzsignalen ortsabhängige Schalter zur Ermittlung der Nullagen der Phasendifferenzen zwischen dem Referenzarm und jedem der Meßarme enthalten, wobei die Nullagen bei in Meßrichtung übereinstimmender Position jeweils eines durch das Meßobjekt am Referenzspiegel vorbeigeführten Meßspiegels bestimmt werden, und Mittel zur Berechnung der Lage des Meßobjekts aufweisen, wobei die Berechnung auf Basis der Phasendifferenzen des ersten und des zweiten Meßarms bezüglich der entsprechenden Nullage mittels Quotientenbildung durch die effektive Phasendifferenz des Streckennormals und Multiplikation mit dem Längermaß des Streckennormals erfolgt.

Es erweist sich von Vorteil, im Zähler des Quotienten das arithmetische Mittel der Phasendifferenzen aus erstem und zweitem Meßarm zu verwenden.

Vorteilhaft sind die beiden Meßspiegel symmetrisch zur Mitte des Meßobjekts angeordnet, damit der in der Mitte des Abstandes der Meßspiegeln liegende Meßort mit der Meßobjektmitte übereinstimmt.

Für mehrdimensional bewegbare Meßobjekte ist es in der Regel ausreichend, wenn in nur einer Koordinatenrichtung ein besagtes Streckennormal zwischen zwei Meßspiegeln installiert ist, während in weiteren Koordinatenrichtungen - dieselbe gemeinsame Laserlichtquelle vorausgesetzt - einfache Interferometer mit einem Meß- und einem Referenzspiegel genügen.

Es erweist sich als vorteilhaft, als optische Mittel zur Strahlführung und symmetrischen Strahlteilung ein symmetrisches Doppelinterferometer einzusetzen, wobei von jedem einzelnen Interferometer ein Referenzarm auf denselben Referenzspiegel und ein Meßarm auf einen der zwei Meßspiegel gerichtet ist.

Eine andere vorteilhafte Variante beinhaltet als optische Mittel zur Strahlführung und symmetrischen Strahlteilung ein Echtheterodyninterferometer, wobei mindestens zwei Meßarme und ein Referenzarm aus der Aufteilung der Strahlenbündel einer Frequenz gespeist, die in gleicher Art und Weise aufgeteilten Strahlenbündel einer zweiten, eng benachbarten Frequenz ohne Durchlaufen eines Interferometerarms mit den Strahlenbündeln der zweiten Frequenz überlagert und die Phasendifferenz der Überlagerungssignale aus den Meßarmen gegenüber den Nullagen der Meßspiegel bezüglich des Referenzspiegels ermittelt werden.

Die Erfindung basiert auf der Überlegung, daß für Präzisionslängenmessungen die Wellenlänge des Laserlichts, das bedeutet sowohl die Frequenz als auch die Umweltbedingungen, unmittelbar im Meßmedium bekannt sein müssen. Für bestimmte Anwendungen, zum Beispiel hochgenaue Positionierprozesse zur Bearbeitung mikroelektronischer Bauelemente, genügt es nicht, wenn das Streckennormal relativ weit, beispielsweise unterhalb eines Tischsystems, vom Meßort entfernt ist. Die erforderliche unmittelbare Erfassung der Umweltbedingungen, verknüpft mit der aktuellen Frequenz des Laserlichts, erfolgt erfindungsgemäß durch zwei Meßspiegel, die auf dem Meßobjekt in wohldefiniertem Abstand angeordnet sind und deren zugeordnete Meßarme auf Phasendifferenz gegenüber der Nullage des jeweiligen Meßspiegels bezüglich des Referenzspiegels ausgewertet werden. Dazu wird durch ortsabhängige Schalter gewährleistet, daß dem Meßwert der ersten Phasendifferenz zwischen dem ersten Meßarm und dem Referenzarm der Nullwert dann zugeordnet wird, wenn sich das Meßobjekt mit seinem ersten Meßspiegel in der Position befindet, bei der erster Meßstrahl und Referenzstrahl gleiche Länge aufweisen (Nullage), und dem Meßwert der zweiten Phasendifferenz zwischen dem zweiten Meßarm und dem Referenzarm der Nullwert für die analog definierte Nullage des zweiten Meßspiegels zugeordnet wird.

Unter diesen Randbedingungen läßt sich die Lage des Meßobjekts, bezogen auf die Mitte des Abstandes zwischen den Meßspiegeln gegenüber dem Ort des Referenzspiegels, als Quotient der Summe der ersten und der zweiten Phasendifferenz durch deren Differenz, multipliziert mit dem halben Streckennormal, ermitteln. Bezeichnet man den der Laserlichtquelle am nächsten gelegenen Meßspiegel als ersten Meßspiegel, der den Meßwert der Phasendifferenz $P_1$ hervorbringt, und den entfernteren Meßspiegel als zweiten Meßspiegel mit der gemessenen Phasendifferenz $P_2$, dann ist - positives Vorzeichen für die vom Interferometer wegführende Bewegungsrichtung vorausgesetzt - der von Wellenlängenänderungen im Meßmedium unabhängige Meßwert

$$I_x = \frac{P_1 + P_2}{P_2 - P_1} \cdot \frac{I_N}{2}$$

der Abstand der Mitte zwischen den zwei Meßspiegeln gegenüber dem Ort des Referenzspiegels, wobei $I_N$ als Streckennormal den Abstand der zwei Meßspiegel verkörpert. Bringt man außerdem die Meßspiegel symmetrisch zur Mitte des Meßobjekts an, dann entspricht der obige Meßwert $I_x$ exakt der in vielen praktischen Anwendungen gewünschten Verschiebung der Meßobjektmitte 51 und erspart zusätzliche Korrekturrechnungen.

Eine solche erfindungsgemäße Interferometeranordnung ermöglicht die exakte Bestimmung der Meßobjektlage unabhängig von den Schwankungen der Laserlichtfrequenz und der Umweltbedingungen. Sie liefert auf Grund ihrer Genauigkeit und Reproduzierbarkeit der Messungen einen definierten metrologischen Anschluß des Interferometers an das Meßobjekt, der bis zum Ausschalten der Laserlichtquelle erhalten bleibt.

Die erfindungsgemäße Interferometeranordnung besitzt gegenüber den bekannten gattungsgemäßen Lösungen weiterhin den Vorteil, daß bei einer inkrementellen Auswertung der Phasendifferenzen die Auflösung infolge der Summenbildung im Zähler des Quotienten bei √2-fach höherer Genauigkeit verdoppelt wird, wenn die Division durch 2 erst am Ende der Berechnung erfolgt.

Weiterhin sind Fehler, die durch Verkippen des Meßobjekts senkrecht zur Meßrichtung verursacht werden können, durch geringen Strahlabstand der Meßarme vermeidbar.

Die Erfindung soll nachstehend anhand von Ausführungsbeispielen näher erläutert werden. Die Zeichnungen zeigen:

Fig. 1        den Prinzipaufbau der erfindungsgemäßen Interferometeranordnung
Fig. 2        ein Ausführungsbeispiel unter Verwendung eines symmetrischen Doppelinterferometers
Fig. 3        eine Ausführungsvariante unter Verwendung eines mehrarmigen Heterodyninterferometers

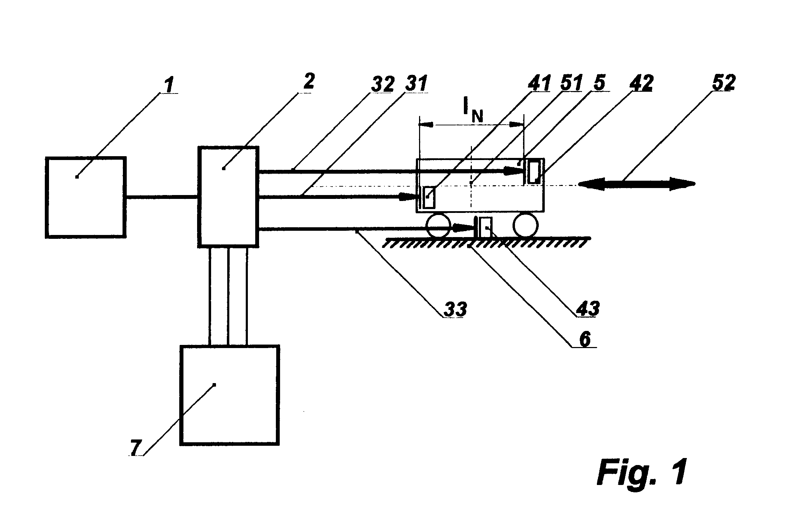

Die erfindungsgemäße Anordnung besteht in ihrem Grundaufbau - wie in Fig. 1 dargestellt - aus einer Laserlichtquellel, optischen Mitteln 2 zur Strahlführung und Strahlteilung in Form eines mehrarmigen mindestens dreiarmigen Interferometers, dessen Interferometerarme 31, 32, 33 auf im Meßmedium befindliche Reflektoren 41, 42, 43 gerichtet sind, einem Meßobjekt 5, wobei das Meßobjekt 5 mindestens eindimensional in Richtung der Interferometerarme auf einer Meßsystembasis 6 bewegbar ist und die Reflektoren in Form eines ersten und zweiten Meßspiegels 41 und 42 auf dem Meßobjekt 5 und eines Referenzspiegels 43 auf der Meßsystembasis 6 befestigt sind, sowie Mitteln 7 zur Aufnahme und Auswertung der Interferenzsignale. Gemäß der Erfindung sind der erste und der zweite Meßspiegel 41 und 42 in Richtung der parallel verlaufenden Interferometerarme in einem wohldefinierten Abstand zueinander angeordnet, wobei dieser Abstand ein Streckennormal $I_N$ darstellt, das die direkt am Meßort im Meßmedium auftretende Laserwellenlänge in den Meßprozeß integriert.

Die Funktion soll an folgenden zwei Beispielen erläutert werden.

3

Beispiel 1

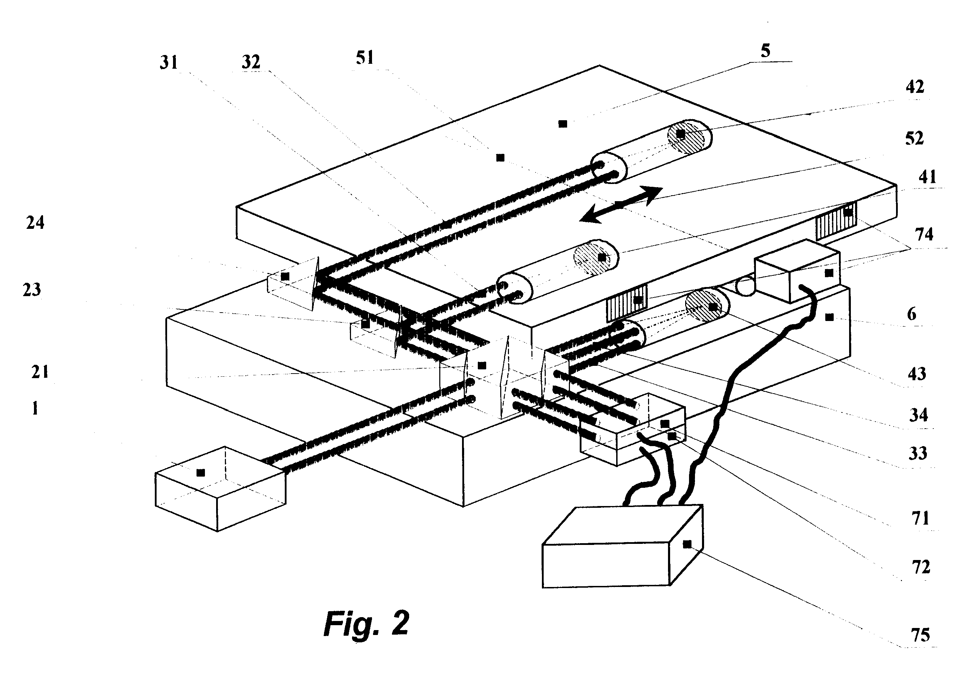

Gemäß Fig. 2 wird das Licht der Laserlichtquelle 1 auf ein symmetrisches Doppelinterferometer 21 geführt. Aus dem Doppelinterferometer gehen zwei Meßarme, ein erster Meßarm 31 und ein zweiter Meßarm 32, sowie zwei den Meßarmen 31, 32 jeweils zugeordnete Referenzarme 33 und 34 hervor. Wie Fig. 2 zeigt, verlaufen die Interferometerarme in Richtung einer zu messenden Bewegungskoordinate eines Meßobjekts 5, das - ohne Beschränkung der Allgemeinheit - als x-y-Tisch angenommen werden soll. Der Meßarm 31 wird über einen Umlenkspiegel 23 auf den bereits in Fig. 1 erwähnten ersten Meßspiegel 41 geführt, der dem Doppelinterferometer 21 näher liegt als der auf demselben Meßobjekt 5 ebenfalls starr befestigte zweite Meßspiegel 42, an dem das über einen Umlenkspiegel 24 geführte Licht des zweiten Meßarms 32 reflektiert wird. Zur Erzeugung von auswertbaren Interferenzsignalen müssen den reflektierten Strahlenbündeln der Meßarme 31 und 32 die zugehörigen Referenzstrahlenbündel überlagert werden, d.h. beide Referenzarme 33 und 34 werden auf denselben Referenzspiegel 43 geführt. Der Referenzspiegel 43 ist an der Meßsystembasis 6 so angebracht, daß die Meßspiegel 41 und 42 jeweils auf die gleiche Position bezüglich der zu messenden Bewegungskoordinate (Meßrichtung 52) gebracht werden können. Diese Voraussetzung ist für die Auswertung der aktuell gemessenen Phasendifferenzen $P_1$ und $P_2$ notwendig, um zum Zweck eines metrologischen Anschlusses des Maßstabs der Laserlichtwellenlänge an die Bezugspunkte der Meßsystembasis 6 und des Meßobjekts 5 Nullwerte der Phasendifferenzen $P_1$ und $P_2$ für sogenannte Nullagen der Meßspiegel 41 und 42 gegenüber dem Referenzspiegel 43 ermitteln zu können.

Die Mittel 7 zur Aufnahme und Auswertung der Interferenzsignale nehmen mittels zweier in Fig. 2 angedeuteter Empfänger 71 und 72 die Signale aus den jeweils aus Meßarm 31 und Referenzarm 33 sowie aus Meßarm 32 und Referenzarm 34 überlagerten Strahlenbündeln auf, wenn eine entsprechende Messung ausgelöst wird.

Zusätzlich werden beim "Überfahren" der oben erwähnten Nullagen zwischen dem Referenzspiegel 43 und jeweils einem der Meßspiegel 41 bzw. 42 durch ortsabhängige Schalter 74 (hier speziell ausgeführt als ein optischer Aufnehmer mit zwei bewegten Schaltmarken) Messungen ausgelöst, die je einen Nullwert zu den als Meßinformation dienenden Phasendifferenzen $P_1$ (über Meßspiegel 41) und $P_2$ (über Meßspiegel 42) beinhalten. Damit stellen die ortsabhängigen Schalter 74 sicher, daß der Nullwert der Phasendifferenz $P_1$ zwischen dem ersten Meßarm 31 und dem Referenzarm 33 einer ersten Nullage des Meßobjekts 5 (bei übereinstimmender Position von erstem Meßspiegel 41 und Referenzspiegel 43) entspricht und der Nullwert der Phasendifferenz $P_2$ zwischen dem zweiten Meßarm 32 und dem Referenzan 34 einer zweiten Nullage (bei übereinstimmender Position von zweitem Meßspiegel 42 und Referenzspiegel 43) zugeordnet wird. Diese Messung der Nullwerte der Phasendifferenzen $P_1$ und $P_2$ ist lediglich einmalig beim Einschalten der Laserlichtquelle 1 erforderlich, um einen metrologischen Anschluß des Maßstabs (Laserwellenlänge) an die Nullagen der Meßspiegel 41 und 42 bezüglich des Referenzspiegels 43 - und damit an die Meßsystembasis 6 - herzustellen. Der metrologische Anschluß bleibt solange erhalten, wie der Maßstab zur Verfügung steht, d.h. bis die Laserlichtquelle 1 abgeschaltet wird.

Für die Berechnung des Meßwertes $I_x$ der Lage des Meßobjekts 5 bezüglich des Ortes des Referenzspiegels 43 geht neben den ständig zu messenden aktuellen Phasendifferenzen $P_1$ und $P_2$ und den stets bei Inbetriebnahme des Lasers aufzunehmenden Nullwerten auch einmalig der exakt vermessene Abstand der Meßspiegel 41 und 42 als Streckennormal $I_N$ in die Auswerteeinheit 75 ein. Dazu bestehen entsprechende Verbindungen von den Empfängern 71 und 72 und den ortsabhängigen Schaltern 74 zur Auswerteeinheit 75, während das Streckennormal $I_N$ einmalig als Längenmaß eingegeben wird. Die Berechnung des exakten (von Wellenlängenänderungen im Meßmedium unabhängigen Meßwertes $I_x$ erfolgt in der Auswerteeinheit 75 in folgender Weise.

Mit den Prämissen, daß der Bezugspunkt der Messung auf dem Meßobjekt 5 die Mitte zwischen den Meßspiegeln 41 und 42 ist und ein positives Vorzeichen des Meßwertes $I_x$ die vom Referenzspiegel 43 und vom Doppelinterferometer 21 wegführende Bewegung kennzeichnet, ergibt sich unter Verwendung der oben erläuterten Eingangsdaten der Auswerteeinheit 75 der Meßwert $I_x$ der Ortskoordinate in der Meßrichtung 52 zu:

$$I_x = \frac{P_1 + P_2}{P_2 - P_1} \cdot \frac{I_N}{2}$$

Sind die beiden Meßspiegel 41 und 42 symmetrisch zur Meßobjektmitte 51 angeordnet, dann entspricht der Meßwert $I_x$ exakt der in praktischen Anwendungen (wie z.B. im Falle des angenommenen x-y-Tisches) gewünschten Meßobjektmitte 51 und erspart weitere Korrekturrechnungen.

Prinzipiell kann der Bezugspunkt der Längenmessung auf dem Meßobjekt 5 aber auch beliebig gewählt werden, und zwar bis hin zu solchen Extremfällen, daß der Bezugspunkt in eine der Positionen des ersten oder zweiten Meßspiegels 41 oder 42 gelegt wird. Für die Extremfälle vereinfacht sich die obige Gleichung zu

$$I_x = \frac{P_1 \cdot I_N}{P_2 - P_1} \quad \text{bzw.} \quad I_x = \frac{P_2 \cdot I_N}{P_2 - P_1},$$

wobei jedoch - wie für alle anderen Fälle eines beliebig auf dem Meßobjekt 5 gewählten Bezugspunktes - die vorteilhafte erhöhte Auflösung und Genauigkeit verlorengeht und unterschiedliche Fehlergrößen zu berücksichtigen sind.

2. Beispiel

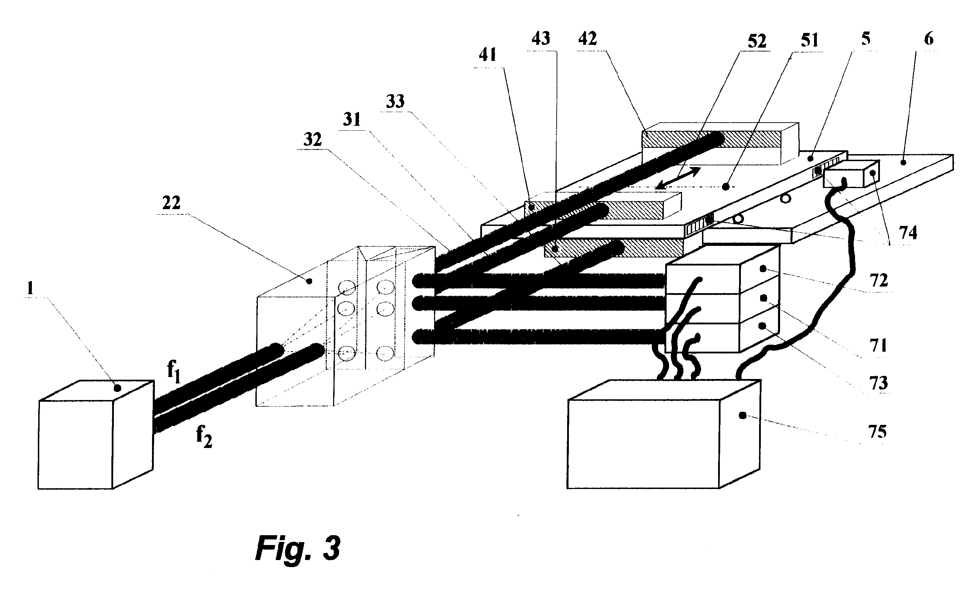

Eine weitere Variante zur Realisierung der erfindungsgemäßen Interferometeranordnung zeigt Fig. 3. Hier sind die optischen Mittel 2 zur Strahlführung und Strahlteilung in Form eines dreiarmigen symmetrischen Interferometers dargestellt, wobei als spezielle Ausführung ein Echtheterodyninterferometer 22 gewählt wurde, wie es aus der DE-OS 42 21 850 bekannt ist. Die Anbringung der Meß- und Referenzspiegel 41, 42 und 43 an Meßobjekt 5 und Meßsystembasis 6 erfolgt in gleicher Weise wie im ersten Beispiel.

Das Echtheterodyninterferometer 22 verwendet zwei von einer Laserlichtquelle 1 bereitgestellte, parallele Strahlenbündel mit eng benachbarten Frequenzen $f_1$ und $f_2$, die in zwei parallelen Ebenen am gleichen optischen Strahlteiler in identischer Art und Weise in jeweils drei Teilstrahlenbündel aufgespalten und anschließend zueinander parallelisiert werden, bevor die Teilstrahlenbündel der einen Frequenz $f_1$ als erster Meßarm 31, zweiter Meßarm 32 und Referenzarm 33 auf die Meßspiegel 41 und 42 und den Referenzspiegel 43 geführt werden. Die Teilstrahlen der zweiten Frequenz $f_2$ werden im Echtheterodyninterferometer 22 intern umgelenkt und auf drei Empfänger 71, 72 und 73 geführt, die auch die parallelen Eingangskanäle für die rückreflektierten Meß- und Referenzarme 31, 32 und 33 mit der ersten Frequenz $f_1$ darstellen. Dabei werden die Strahlenbündel aus den Meß- und Referenzarmen 31, 32 und 33, die sämtlich die erste Frequenz $f_1$ aufweisen, mit den infolge gleicher Strahlteilung zugeordneten Teilstrahlenbündeln der zweiten Frequenz $f_2$ überlagert. Die in den Empfängern 71, 72 und 73 registrierten Überlagerungssignale werden dann auf elektronischem Wege auf Phasendifferenzen $P_1$ und $P_2$ ausgewertet, wobei der Empfänger 71 das Signal aus dem ersten Meßarm 31, der Empfänger 72 das aus dem zweiten Meßarm 32 und der Empfänger 73 das aus dem Referenzarm 33 enthält. Damit werden die Phasendifferenz $P_1$ aus den Überlagerungssignalen der Empfänger 71 und 73 sowie die Phasendifferenz $P_2$ aus den Überlagerungssignalen der Empfänger 72 und 73 bestimmt und wie im Beispiel 1 zur Berechnung des Meßwertes $I_x$ verwendet. Die bei Einschaltung der Laserlichtquelle 1 beschriebene einmalige Bestimmung der Nullwerte der Phasendifferenz $P_1$ und $P_2$ erfolgt wie im Beispiel 1 über ortsabhängige Schalter 74, jedoch mit dem Unterschied, daß - wie oben erläutert - die Phasendifferenzen $P_1$ und $P_2$ sowie deren Nullwerte nicht direkt aus den Empfängersignalen resultieren, sondern in der Auswerteeinheit 75 das Ergebnis der elektronischen Auswertung sind. Alle übrigen Funktionen der Interferometeranordnung als Ganzes sind identisch wie im Beispiel 1 beibehalten. Gleiches gilt auch für die Wahl des Bezugspunktes auf dem Meßobjekt 5 und die Anwendung der Gleichung zur Berechnung des Meßwertes $I_x$ der Ortskoordinate in der Meßrichtung 52.

Liste der Bezugszeichen

| | |
|---|---|
| 1 | Laserlichtquelle |
| 2 | optische Mittel (zur Strahlführung und symmetrischen Strahlteilung) |
| 21 | Doppelinterferometer |
| 22 | Echtheterodyninterferometer |
| 23 | |
| 24 | Umlenkspiegel |
| 31 | erster Meßarm |
| 32 | zweiter Meßarm |
| 33 | Referenzarme |
| 34 | |
| 41 | erster Meßspiegel |
| 42 | zweiter Meßspiegel |
| 43 | Referenzspiegel |
| 5 | Meßobjekt |
| 51 | Meßobjektmitte |
| 52 | Meßrichtung |
| 6 | Meßsystembasis |
| 7 | Mittel zur Aufnahme und Auswertung der Interferenzsignale |
| 71 | |
| 72 | Empfänger |
| 73 | |
| 74 | ortsabhängige Schalter |
| 75 | Auswerteeinheit |
| $I_N$ | Streckennormal |
| $I_x$ | Meßwert |
| $P_{1,2}$ | Phasendifferenzen |
| $f_{1,2}$ | Frequenzen |

**Patentansprüche**

1. Interferometeranordnung zur frequenz- und umweltunabhängigen Längenmessung, die eine Laserlichtquelle, optische Mittel zur Strahlführung und symmetrischen Strahlteilung in mindestens drei Interferometerarme, wobei zwei parallele Interferometerarme ein Streckennormal in Form von innerhalb des Meßvolumens mit festem Abstand angeordneten Reflektoren aufweisen, ein wenigstens in Richtung des Streckennormals auf einer Meßsystembasis bewegliches Meßobjekt sowie Mittel zur Aufnahme und Auswertung von Interferenzsignalen enthält, dadurch gekennzeichnet,

   - mindestens ein erster und ein zweiter Meßarm (31;32) vorhanden sind, wobei für beide Meßarme (31;32) jeweils ein Meßspiegel (41;42) auf dem Meßobjekt (5) angeordnet ist und die Meßspiegel (41;42) in Meßrichtung (52) den Abstand des Streckennormals ($l_N$) aufweisen.
   - wenigstens ein weiterer Interferometerarm als Referenzarm (33) mit einem Referenzspiegel (43) vorhanden ist, wobei der Referenzspiegel (43) mit der Meßsystembasis (6) starr verbunden und so angeordnet ist, daß das von den Meßspiegeln (41;42) gebildete Streckennormal ($l_N$) vollständig am Referenzspiegel (43) vorbeibewegbar ist, und
   - die Mittel zur Aufnahme und Auswertung von Interferenzsignalen ortsabhängige Schalter (74) zur Ermittlung der Nullagen der Phasendifferenzen ($P_1$;$P_2$) zwischen dem Referenzarm und jedem der Meßarme enthalten, wobei die Nullagen bei in Meßrichtung (52) übereinstimmender Position jeweils eines durch das Meßobjekt (5) am Referenzspiegel (43) vorbeigeführten Meßspiegels (41;42) bestimmt werden, und Mittel zur Berechnung der Lage des Meßobjekts (5) aufweisen, wobei die Berechnung auf Basis der Phasendifferenzen ($P_1$;$P_2$) des ersten und des zweiten Meßarms (31;32) bezüglich der entsprechenden Nullage mittels Quotientenbildung eines als Phasendifferenz ausgedrückten, beliebig auf dem Meßobjekt (5) festgelegten Meßpunktes durch die effektive Phasendifferenz des Streckennormals ($l_N$) und Multiplikation mit dem Längenmaß des Streckennormals ($l_N$) erfolgt.

2. Anordnung nach Anspruch 1, dadurch gekennzeichnet,
   daß die Mittel zur Berechnung der Lage des Meßobjekts (5) einen Quotienten aus dem arithmetischen Mittel der Phasendifferenzen ($P_1$;$P_2$) und der Differenz der Phasendifferenzen ($P_1$;$P_2$), multipliziert mit dem Streckennormal ($l_N$), errechnet.

3. Anordnung nach Anspruch 1, dadurch gekennzeichnet,
   daß die Meßspiegel (41;42) symmetrisch bezüglich der Meßobjektmitte (51) angeordnet sind.

4. Anordnung nach Anspruch 1, dadurch gekennzeichnet,
   daß für ein mindestens zweidimensional bewegliches Meßobjekt (5) wenigstens eine Koordinatenrichtung des Meßobjekts (5) ein besagtes Streckennormal ($l_N$) zwischen den Meßspiegeln (41;42) zweier Meßarme (31;32) aufweist.

5. Anordnung nach Anspruch 1, dadurch gekennzeichnet,
   daß die optischen Mittel zur Strahlführung und symmetrischen Strahlteilung ein symmetrisches Doppelinterferometer (21) beinhalten, wobei von jedem einzelnen Interferometer ein Referenzarm (33;34) auf denselben Referenzspiegel (43) und ein Meßarm (31;32) auf einen der zwei Meßspiegel (41;42) gerichtet ist.

6. Anordnung nach Anspruch 1, dadurch gekennzeichnet,
   daß die optischen Mittel zur Strahlführung und Strahlteilung ein Heterodyninterferometer (22) beinhalten, wobei die Meßarme (31;32) und der Referenzarm (33) aus der Aufteilung eines Lichtbündels einer ersten Frequenz gespeist, auf gleiche Weise aufgeteilte Lichtbündel einer zweiten, der ersten eng benachbarten Frequenz ohne Durchlaufen eines Meß- oder Referenzarmes (31;32;33) mit den jeweils zugeordneten rückreflektierten Lichtbündeln der ersten Frequenz in den Empfängern (71;72;73) überlagert und die Phasendifferenzen aus den Überlagerungssignalen ermittelt werden.

**Fig. 1**

1 2 32 31 33 43 6 7 41 51 5 42 52 N

Fig. 2

Fig. 3